# EUROPÄISCHE PATENTSCHRIFT

(11) **EP 1 722 122 B1**
(45) Veröffentlichungstag und Bekanntmachung des Hinweises auf die Patenterteilung: **09.07.2008**
(21) Anmeldenummer: 05010169.0
(22) Anmeldetag: 10.05.2005
(51) Int. Cl.: F16D 69/04

(54) **Verfahren zur Herstellung eines Konusringes mit Sinnterreibbelag**
Manufacturing method for a conical ring with a sintered friction lining
Procédé pour produire un anneau conique avec une garniture de friction frittée

(43) Veröffentlichungstag der Anmeldung: 15.11.2006
(73) Patentinhaber: Hoerbiger Antriebstechnik GmbH, 86956 Schongau (DE)
(72) Erfinder: Fürguth, Werner, 87640 Biessenhofen/Altdorf (DE)
(74) Vertreter: Schaeberle, Steffen

(56) Entgegenhaltungen:
- EP-A- 0 774 594
- EP-A- 0 792 715
- US-A- 5 143 192

## Beschreibung

Die Erfindung betrifft ein Verfahren zur Herstellung eines Konusringes mit Sinterreibbelag gemäß Anspruch 1 und einen Konusring, gemäß Anspruch 5, der durch dieses Verfahren hergestellt ist.

Bei einem aus der EP 0 792 715 B1 bekannten Verfahren wird eine besinterte metallische Trägerfolie in einen metallischen Basiskörper mit kegelstumpfförmiger Ringfläche eingezogen. Die Verbindung zwischen dem Reibbelagträger und dem Basiskörper wird beispielsweise gemäß dem oben genannten Patent durch Verschweißen hergestellt.

Es ist demgegenüber Aufgabe der vorliegenden Erfindung, ein Verfahren zur Herstellung eines Konusringes mit Sinterreibbelag zu schaffen, das gegenüber bekannten Verfahren wirtschaftlicher und einfacher ist.

Die Lösung dieser Aufgabe erfolgt durch die Merkmale des Anspruchs 1.

Erfindungsgemäß wird ein Edelstahlträger mit einer Streusinterschicht belegt und wie üblich zur Herstellung eines Sinterreibbelages in einem Ofen gebacken. Im Rahmen der Erfindung durchgeführte Untersuchungen haben hierbei ergeben, dass der beim Backen entstehende Reibbelag keine Bindung mit dem Material des Trägers eingeht und daher nach dem Ofendurchlauf leicht vom Edelstahlträger gelöst werden kann.

Die so gewonnene Belagabwicklung wird anschließend in die kegelstumpfförmige Fläche des Basisringes gefügt und mittels Stoffschluss zu einer Einheit mit dem Basisring verbunden.

Die besonderen Vorteile eines derart hergestellten Konusringes liegen vor allem in der kostengünstigen Herstellung, da auf die Trägerfolie, auf die der Stand der Technik angewiesen ist, verzichtet werden kann. Insbesondere können durch das erfindungsgemäße Verfahren auf kostengünstige und einfache Art und Weise Einfachsynchronisierungen bzw. Synchronringe für derartige Synchronisierungen hergestellt werden, die sich durch den weiteren Vorteil einer hohen Missbrauchssicherheit auszeichnen.

Die Unteransprüche haben vorteilhafte Weiterbildungen der Erfindung zum Inhalt.

Vom Prinzip her sind als Stoffschluss neben dem besonders bevorzugten Kleben auch Löten und Schweißen möglich. Die Erfindung betrifft ferner einen nach dem Verfahren hergestellten Konusring entsprechend Anspruch 5.

## Patentansprüche

1. Verfahren zur Herstellung eines Konusringes mit einem auf einer kegelstumpfförmigen Ringfläche angeordneten Sinterreibbelag mit folgenden Verfahrensschritten:
- Herstellen eines konischen Basisringes mit einer kegelstumpfförmigen Ringfläche;
- Belegen eines Edelstahlträgers mit einer Streusinterschicht;
- Backen der Streusinterschicht zu einem Sinterreibbelag;
- Trennen des Sinterreibbelags vom Edelstahlträger nach dem Backvorgang;
- Einfügen der gewonnen Sinterreibbelag-Abwicklung in den Basiskörper; und
- Befestigen der Sinterreibbelag-Abwicklung auf der Ringfläche des Basisringes durch Stoffschluss.

2. Verfahren nach Anspruch 1, **dadurch gekennzeichnet, dass** zum Befestigen der Sinterreibbelag-Abwicklung ein Klebvorgang durchgeführt wird.

3. Verfahren nach Anspruch 1, **dadurch gekennzeichnet, dass** zum Befestigen der Sinterreibbelag-Abwicklung ein Lötvorgang durchgeführt wird.

4. Verfahren nach Anspruch 1, **dadurch gekennzeichnet, dass** zum Befestigen der Sinterreibbelag-Abwicklung ein Schweißvorgang durchgeführt wird.

5. Konusring hergestellt durch das Verfahren gemäß einem der Ansprüche 1 bis 4.

## Claims

1. Process for producing a conical ring having a sintered friction lining arranged on a frustum-shaped annular surface, with the following process steps:
- producing a conical base ring having a frustum-shaped annular surface;
- covering a stainless steel support with a scatter-sintered layer;
- firing the scatter-sintered layer to form a sintered friction lining;
- separating the sintered friction lining from the stainless steel support after the firing process;
- inserting the recovered sintered friction lining body in the base body; and
- attaching the sintered friction lining body to the annular surface of the base ring by integration.

2. Process according to claim 1, **characterised in that** an adhesive process is carried out to attach the sintered friction lining body.

3. Process according to claim 1, **characterised in that** a soldering process is carried out to attach the sintered friction lining body.

4. Process according to claim 1, **characterised in that** a welding process is carried out to attach the sintered friction lining body.

5. Conical ring produced by the process according to one of claims 1 to 4.

## Revendications

1. Procédé de production d'un anneau conique avec une garniture de friction frittée disposée sur une surface d'anneau tronconique comportant les étapes de procédé suivantes :
- fabrication d'un anneau de base conique avec une surface d'anneau tronconique ;
- garniture d'un support en acier spécial avec une couche frittée dispersée ;
- cuisson de la couche frittée dispersée pour former une garniture de friction frittée ;
- séparation de la garniture de friction frittée du support en acier spécial après le processus de cuisson ;
- insertion de la réalisation de garniture de friction frittée obtenue dans le corps de base ; et
- fixation de la réalisation de garniture de friction frittée sur la surface de l'anneau de base par liaison de matière.

2. Procédé selon la revendication 1, **caractérisé en ce qu'**un processus de collage est réalisé pour fixer la réalisation de garniture de friction frittée.

3. Procédé selon la revendication 1, **caractérisé en ce qu'**un processus de brasage est réalisé pour fixer la réalisation de garniture de friction frittée.

4. Procédé selon la revendication 1, **caractérisé en ce qu'**un processus de soudage est réalisé pour fixer la réalisation de garniture de friction frittée.

5. Anneau conique produit par le procédé selon l'une quelconque des revendications 1 à 4.
